# EUROPEAN PATENT APPLICATION

(11) **EP 4 772 415 A1**
(43) Date of publication of application: **08.07.2026**
(21) Application number: 26150512.7
(22) Date of filing: 07.01.2026
(51) Int. Cl.: B60W 50/08

(54) **INTERVENTION AND CORRECTION SCALING FOR USE IN STEER-BY-WIRE SYSTEMS**

(30) Priority: 07.01.2025 US 202519012378
(71) Applicant: Volvo Car Corporation, 405 31 Göteborg (SE)
(72) Inventor: HÄLL, Carl Johan, 427 50 BILLDAL (SE); WICKMAN, Casper Gustaf, 475 32 ÖCKERÖ (SE)
(74) Representative: Kransell & Wennborg KB

(57) **Abstract**

Techniques for automated overlay correction of steering angle with minimal driver interference are provided. In an example, a method comprises determining, by a system onboard a vehicle comprising a processor, a level of awareness of a driver. The method can further comprise detecting, by the system, a hazard. The method can further comprise regulating, by the system, lateral control of the vehicle based on the detected hazard and determined level of awareness of the driver.

## Description

### TECHNICAL FIELD

The disclosed subject matter relates to vehicles (e.g., transportation vehicles), and more particularly, to intervention and correction scaling systems for vehicles.

### BACKGROUND

Modem vehicles are increasingly equipped with Advanced Driver Assistance Systems (ADAS) to improve safety, performance, and driver convenience. ADAS includes features such as lane-keeping assist, collision avoidance, adaptive cruise control, and emergency braking. These systems monitor vehicle surroundings using cameras, radar, and other sensors to assist the driver in both routine and emergency driving situations.

Traditionally, vehicles have utilized mechanical steering systems, where the steering wheel is physically connected to the road wheel actuators (e.g., front or rear wheels) via mechanical linkages such as the steering column, rack-and-pinion mechanism, or hydraulic power steering components. When the driver turns the steering wheel, torque is transferred through these linkages to change the angle of the wheels, thus steering the vehicle. However, with the advent of steer-by-wire (SbW) technology, there is no longer a physical mechanical connection between the steering wheel actuator and the road wheel actuators. Instead, steering inputs made by the driver are sensed electronically, and control signals are transmitted to electronic actuators that adjust the steering angle of the road wheels. This system replaces the traditional steering column and mechanical linkages with sensors, electronic control units (ECUs), and motorized actuators, creating a fully electronic steering system.

In SbW systems, the steering wheel actuator is responsible for detecting the driver's steering input, such as the angle, force, or torque applied to the steering wheel. This input is digitized and communicated to the vehicle's ECU. In some systems, the steering wheel actuator also provides haptic feedback (force or vibration) to the driver to simulate road feel or to alert the driver of a corrective action initiated by the vehicle.

Road wheel actuators are electronic or motorized components that physically control the angle of the front or rear wheels based on commands from the ECU. The ECU calculates the desired steering angle based on inputs from the steering wheel actuator, ADAS sensors, and control algorithms. Road wheel actuators can operate independently, enabling advanced features like active rear-wheel steering, variable steering ratios, and autonomous corrective maneuvers.

In traditional mechanical steering systems, there is an inherent connection between the driver and the vehicle dynamics; any change in road wheel behavior (e.g., bumps, tire slippage, or corrective maneuvers) is felt through the steering wheel. This physical feedback helps the driver remain aware of the vehicle's interaction with the road and maintain control during evasive or emergency situations. In contrast, SbW systems eliminate this mechanical connection, introducing a disconnect between the steering wheel and the road wheels. Without natural physical feedback, drivers can perceive automated corrections or evasive maneuvers as unexpected or disorienting, leading to confusion, distrust, or resistance to automated systems. Furthermore, different drivers can interpret the same corrective actions differently. Some can appreciate the intervention, while others can feel a loss of control or unease due to the lack of direct mechanical interaction.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, computer-implemented methods, apparatuses and/or computer program products can facilitate automated overlay correction of steering angle with minimal driver interference.

As noted above, SbW systems eliminate the mechanical connection of traditional mechanical steering systems, introducing a disconnect between the steering wheel and the road wheels. Without natural physical feedback, drivers can perceive automated corrections or evasive maneuvers as unexpected or disorienting, leading to confusion, distrust, or resistance to automated systems. Furthermore, different drivers can interpret the same corrective actions differently. Some can appreciate the intervention, while others can feel a loss of control or unease due to the lack of direct mechanical interaction. Thus, while SbW systems and ADAS technologies individually enhance vehicle performance and safety, the integration of these systems presents several challenges. There is a need for technologies that can ensure smooth and seamless transitions between driver-initiated steering and automated corrections or evasive maneuvers that do not hinder driver confidence and control during system interventions. Present solutions fail to account for driver presence or alertness, leading to confusing and disorienting interventions. There is a need for technologies capable of scaling overlay correction based upon driver presence or alertness.

As alluded to above, improved techniques for automated overlay correction of steering angle with minimal driver interference onboard vehicles are desirable, and various embodiments are described herein to this end and/or other ends.

According to an embodiment, a system can comprise a memory that stores computer executable components, and a processor (e.g., a core computer) that executes the computer executable components stored in the memory, including a driver awareness component that determines a level of awareness of a driver. The computer executable components can further comprise a hazard detection component that detects a hazard. The computer executable components can further comprise a regulation component that regulates lateral control of the vehicle based on the detected hazard and determined level of awareness of the driver.

According to another embodiment, a method can comprise determining, by a system onboard a vehicle comprising a processor (e.g., a core computer), a level of awareness of a driver. The method can further comprise detecting, by the system, for example the processor of the system, a hazard. The method can further comprise regulating, based on the detected hazard and determined level of awareness of the driver, by the system, lateral control of the vehicle.

According to yet another embodiment, a non-transitory machine-readable medium can comprise executable instructions that, when executed by a processor (e.g., a core computer) integrated on or within a vehicle, facilitate performance of operations, comprising determining a level of awareness of a driver; detecting a hazard; and regulating lateral control of the vehicle based on the detected hazard and determined level of awareness of the driver.

### BRIEF DESCRIPTION OF DRAWINGS

FIGS. 1-2 illustrate block diagrams of exemplary intervention correction and scaling systems for vehicles, in accordance with one or more embodiments described herein.
FIGS. 3, 4 and 5 illustrate flow diagrams of example, non-limiting computer implemented methods that can facilitate automated overlay correction of steering angle with minimal driver interference in accordance with one or more embodiments described herein.
FIG. 6 is an example of a non-limiting computing environment in which one or more embodiments described herein can be implemented.
FIG. 7 is an example of a non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

As alluded to above, improved techniques for automated overlay correction of steering angle with minimal driver interference onboard vehicles are desirable, and various embodiments are described herein to this end and/or other ends. In accordance with one or more embodiments, the disclosed solution provides a system for vehicles that facilitates automated overlay correction of steering angle with minimal driver interference. In various embodiments, the onboard computer system of the vehicle can comprise a memory that stores computer-executable components, and a processor that executes the computer executable components stored in the memory. These computer-executable components can include a driver awareness component that determines a level of awareness of a driver. The computer executable components can further include a hazard detection component that detects a hazard. The computer executable components can further include a regulation component that regulates lateral control of the vehicle based on the detected hazard and determined level of awareness of the driver.

According to some embodiments, the driver awareness component can use a camera to determine the level of awareness of the driver. In another embodiment, the driver awareness component can use a seat pressure detector to determine the level of awareness of the driver. In yet another embodiment the driver awareness component can use a pedal pressure detector to determine the level of awareness of the driver. In various embodiments, the driver awareness component can use a radar, a lidar, or an ultrasonic sensor to determine a level of awareness of the driver. In various embodiment, the driver awareness component can detect the presence of passengers in the vehicle. In response to detecting an interaction between the driver and a passenger in the vehicle, the driver awareness component can determine that the level of awareness of the driver has been reduced. In some embodiments, the driver awareness component can detect use of a media system onboard the vehicle or integrated into the vehicle. In response to detecting that the media system is being used, the driver awareness component can determine that the level of awareness of the driver has been reduced. The driver awareness component can detect and/or determine an amount of time that a driver has been operating the vehicle or has been present within the vehicle. The driver awareness component can determine an amount of time that a passenger has been present in the vehicle. The driver awareness component can determine that a passenger has entered the vehicle or has exited the vehicle.

In some embodiments, the driver awareness component can use visual sensors to identify a passenger or to determine in which seat a passenger is sitting. The driver awareness component can determine whether a passenger has entered the vehicle and in which seat the passenger is sitting. The driver awareness component can determine whether a passenger has left the vehicle and whether the seat in which the passenger was sitting is currently unoccupied. The driver awareness component can further determine whether a passenger within the vehicle has changed seats and in which seat the passenger is presently occupying.

In some embodiments, the regulation by the regulation component can further comprise regulation of a hand wheel activator of the vehicle. As used herein, a hand wheel activator refers to a manually operated device that can enable precise control of a vehicle's systems or mechanisms. Hand wheel activators can consist of a hand-operated wheel that connects mechanically or electronically to a system, such as steering, braking, or throttle. Hand wheel activators can be mounted within reach of a driver or operator. Hand wheel activators can be used in specialized vehicles or equipment (e.g., agricultural machinery, construction vehicles, adaptive vehicles or individuals with disabilities, etc.). Hand wheel activators can convert rotational motion of a wheel into linear or angular motion through gears, linkages, or electronic signals. For example, when a user turns a hand wheel, this motion can be transmitted through a connecting shaft, which can serve as a primary conduit for transferring generated energy. A gear system can be incorporated to modify speed, torque, or direction of the motion. Linkages or lever arms can translate the rotational motion into linear or other mechanical actions, thereby transferring the movement to the controlled system (e.g., a braking mechanism or throttle). A hand wheel can interface with hydraulic or pneumatic actuators, such that rotation pressurizes a fluid or air system to amplify force and enable operation of heavy or high-resistance components. Feedback mechanisms, such as springs or dampers, can provide tactile resistance or restore a wheel to its neutral position, thereby enhancing operational control and providing sensory feedback on system status. Mechanical motion can be converted into electronic signals using sensors (e.g., rotary encoders or potentiometers), which can be processed by an electronic control unit.

The degree of regulation of the hand wheel activator can be scaled based upon the determined level of awareness of the driver. In response to a determination of a level of awareness above a certain threshold, also referred to as (driver) awareness threshold, by the driver awareness component, the level of regulation of the hand wheel activator by the regulation component can be increased. In response to a determination of a lower level of awareness by the driver awareness component, the level of regulation of the hand wheel activator by the regulation component can be decreased. Alternatively, in response to a determination of a level of awareness above a certain threshold by the driver awareness component, the level of regulation of the hand wheel activator by the regulation component can be decreased, and in response to a determination of a lower level of awareness by the driver awareness component, the level of regulation of the hand wheel activator by the regulation component can be increased. It will be appreciated by one of ordinary skill in the art that the regulation can context specific depending on desired results. For example, if the system is intended to prioritize smoothness of a drive, the regulation can be reduced in response to a lower level of driver awareness in order to ensure that the driver feels in control of the vehicle and is not surprised by sudden regulation. Conversely, if a priority of the system is to redirect driver attention to the road in the event of a detected hazard, the regulation can be increased in response to a lower level of driver awareness in order to ensure that the driver is made aware of the correction.

Similarly, the degree of regulation of the hand wheel activator can be scaled based upon a determined level of hazard to the driver or to the vehicle. In response to a determination of a level of hazard above a certain threshold, also referred to as hazard threshold, by the hazard detection component, the level of regulation of the hand wheel activator by the regulation component can be increased. In response to a determination of a lower level of hazard by the hazard detection component, the level of regulation of the hand wheel activator by the regulation component can be decreased. Alternatively, in response to a determination of a level of hazard above a certain threshold by the hazard detection component, the level of regulation of the hand wheel activator by the regulation component can be decreased, and in response to a determination of a lower level of hazard by the hazard detection component, the level of regulation of the hand wheel activator by the regulation component can be increased. It will be appreciated by one of ordinary skill in the art that the regulation can context specific depending on desired results. For example, if the system is intended to prioritize smoothness of a drive, the regulation can be reduced in response to a lower level of hazard in order to ensure that the driver feels in control of the vehicle and is not surprised by sudden regulation. Conversely, if a priority of the system is to redirect driver attention to the road in the event of a detected hazard, the regulation can be increased in response to a greater level of hazard in order to ensure that the driver is made aware of the hazard and correction.

In some embodiments, the computer-executable components can include an artificial intelligence component. The artificial intelligence component can train an artificial intelligence model to determines a level of awareness of the driver.

According to an embodiment, the artificial intelligence component can train the artificial intelligence model to detect hazards. As used herein, "hazard" can refer to any condition, object, or event in an environment or operational state of a vehicle that can pose a potential risk to safety, functionality, or efficiency of vehicle operation. Hazards can include dynamic elements such as oncoming traffic, pedestrians, or adverse weather conditions, as well as static obstacles like roadblocks, potholes, or debris. A hazard can also encompass scenarios arising from a vehicle's internal systems, such as mechanical failures or sensor malfunctions, which could compromise safe driving. As used herein, the term "hazard" encompasses any perceivable factor that requires attention, mitigation, or avoidance to maintain safe and optimal vehicle performance. In various embodiments, the artificial intelligence component can train the artificial intelligence model to regulate operation of the vehicle based on the detected hazard and determined level of awareness of the driver.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, conductive coupling, acoustic coupling, ultrasound coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments described herein.

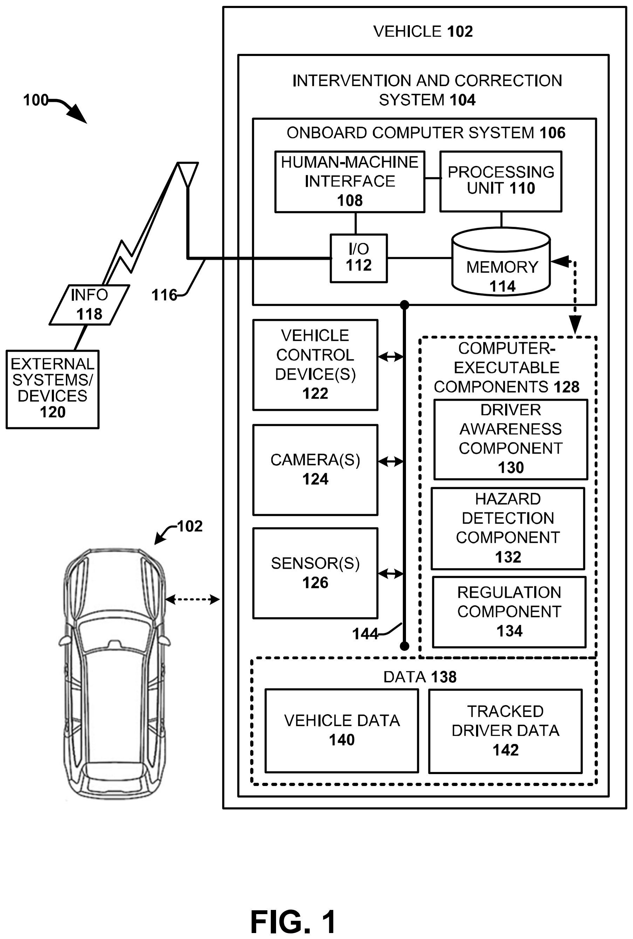

Turning now to the drawings, FIG. 1 illustrates a block diagram of an exemplary system 100 that facilitates automated overlay correction of steering angle with minimal driver interference. System 100 includes a vehicle 102 comprising an intervention and correction system 104 integrated thereon or therein. The intervention and correction system 104 includes one or more vehicle control device 122, one or more cameras 124, one or more sensors 126 and an onboard computer system 106. The onboard computer system 106 comprises at least one memory 114 that stores computer-executable components 128 and data 138 that facilitate automated overlay correction of steering angle with minimal driver interference onboard vehicle 102. These computer-executable components include (but are not limited to) driver awareness component 130, hazard detection component 132, and regulation component 134. The onboard computer system 106 includes at least one processor or processing unit 110 that executes the computer-executable component 128 stored in memory 114 to carry out the operations/functions described with respect to the corresponding computer-executable components.

Processor 110 can be a core computer of the vehicle 102. A core computer of a vehicle can refer to a central processing system that integrates, manages, and coordinates various electronic and computational functions within a vehicle. A core computer can serve as a primary hub for processing data and executing commands across multiple subsystems, including engine control, transmission, braking, steering, infotainment, advanced driver-assistance systems (ADAS), and connectivity features. A core computer can include a high-performance processor or system-on-chip (SoC) capable of handling real-time data processing, decision-making, and communication tasks, and can interface with sensors, actuators, and control modules distributed throughout a vehicle, thereby ensuring seamless operation and communication between different components. For example, in vehicles with autonomous or semi-autonomous capabilities, a core computer can process inputs from cameras, LiDAR, radar, and GPS to make real-time driving decisions. Processor 110 can further constitute a cloud-based or remote server integrated in a vehicle's onboard systems and operationally connected to an external computing infrastructure. Vehicle 102 can be equipped with sensors 126 (such as cameras, LiDAR, radar, and GPS) that can gather real-time data about an environment and internal systems. Raw or pre-processed data from the sensors 126 can be transmitted to remote servers or cloud systems. Results can then be sent back to the vehicle 102 to inform decision-making or optimize performance.

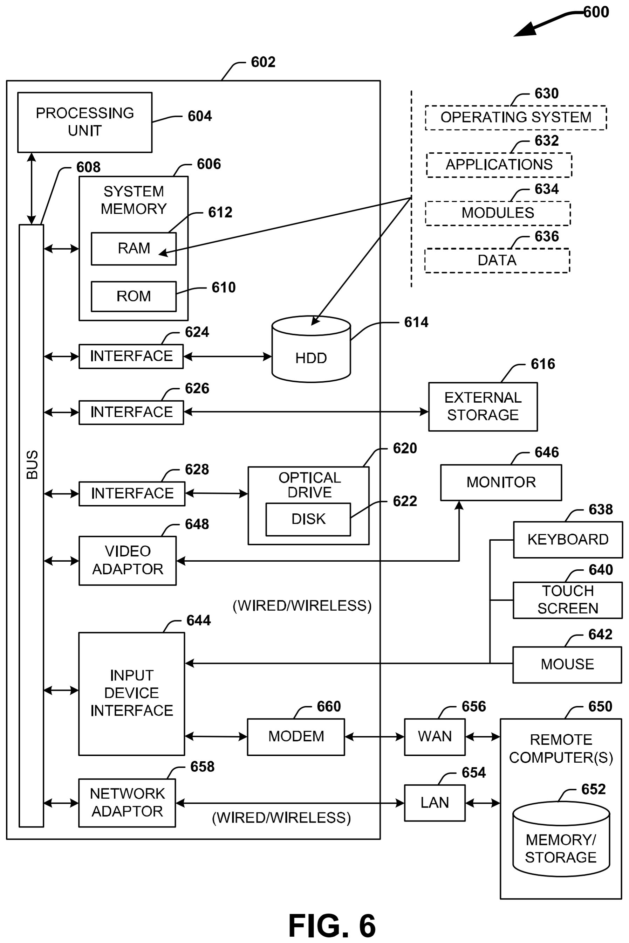

Examples of said memory 114, processing unit 110, and other computer system components that can be included in the onboard computer system 106 to facilitate the various features and functionalities of system 100 can be found with reference to FIG. 6 (e.g., system memory 610, processing unit 604, and the like).

The onboard computer system 106 can further include an input/output (I/O) component 112, wherein the I/O component 112 can be a transceiver configured to enable transmission/receipt of information 118 between the onboard computer system 106 and various external systems or devices 120. For example, the external systems or devices 120 can correspond to any type of device or computing system configured to wirelessly communicate (e.g., using radio frequency signals) with the onboard computer system 106, such as but not limited to, a mobile device associated with one or more users of the vehicle 102 (e.g., a smartphone, a smartwatch, a tablet, eyewear, a wearable headset or another type of wearable device), an external computer, an external computer system, an external application server, another vehicle's onboard computer system, and so on. The I/O component 112 can be communicatively coupled, via an antenna 116, to the remotely located devices and systems (e.g., external systems/devices 120). Any suitable technology can be utilized to enable the various embodiments presented herein, regarding transmission and receiving of information 118 between the onboard computer system 106 and one or more external systems/devices 120. Suitable technologies include BLUETOOTH^{®}, cellular technology (e.g., 3G, 4G, 5G), internet technology, ethernet technology, ultra-wideband (UWB), DECAWAVE^{®}, IEEE 802.15.4a standard-based technology, Wi-Fi technology, Radio Frequency Identification (RFID), Near Field Communication (NFC) radio technology, and the like.

The onboard computer system 106 can also include a human-machine interface 108 that provides for receiving user input in association with utilizing the various features and functionalities of the computer-executable component 134 and presenting information to users. For example, the human-machine interfaces 108 can include or correspond to any suitable output device such as a display, a speaker, etc. and any suitable input device, such as a touchscreen display, a microphone, a keypad, a keyboard, a camera, a gesture input device/system, a voice input device/system, and the like. Examples of suitable input and output devices of the human-machine interface 108 devices are further provided with reference to FIG. 6. The intervention and correction system 104 also include a system bus 144 that communicatively and operatively couples the onboard computer system 106, the one or more vehicle control device 122, the one or more cameras 124 and the one or more sensors 126 to one another using any suitable wired or wireless communication technology.

Vehicle 102 can correspond to any suitable type of transportation vehicle comprising one or more windows and adapted for use in scenarios in which monitoring the external environment is important, such as varying weather conditions or navigation in complex environments. For instance, vehicle 102 can include or correspond to any suitable type of motor vehicle (e.g., a car, a truck, a van, a sport utility vehicle (SUV), etc.). In some implementations vehicle 102 can also include or correspond to an aircraft (e.g., an airplane, a helicopter, or the like), a watercraft, or another type of passenger transportation vehicle. In some embodiments, vehicle 102 can include or correspond to an autonomous vehicle that is capable of navigating and operating without (or some) human input.

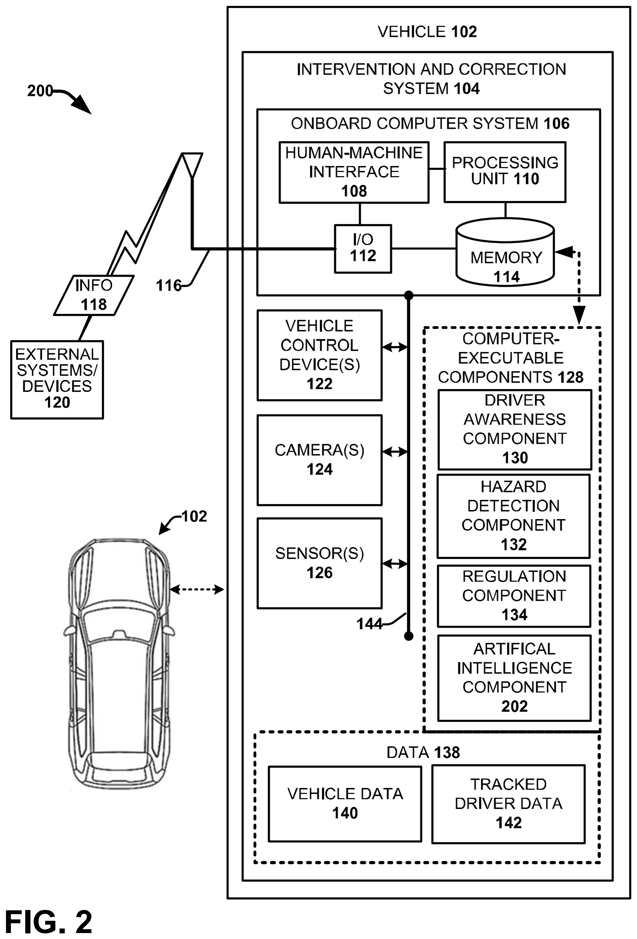

FIG. 2 illustrates an example system 200 that can facilitate automated overlay correction of steering angle with minimal driver interference onboard vehicle 102. System 200 includes a vehicle 102 comprising an intervention and correction system 104 integrated thereon or therein. The intervention and correction system 104 includes one or more vehicle control device 122, one or more cameras 124, one or more sensors 126 and an onboard computer system 106. The onboard computer system 106 comprises at least one memory 114 that stores computer-executable components 128 and data 138 that facilitate automated overlay correction of steering angle with minimal driver interference onboard vehicle 102. System 200 includes computer-executable components (but are not limited to) driver awareness component 130, hazard detection component 132, regulation component 134 and artificial intelligence component 202.

The driver awareness component 130 can use a camera (e.g., camera 124) to determine the level of awareness of the driver. In another embodiment, the driver awareness component 130 can use a seat pressure detector (e.g., sensor 126) to determine the level of awareness of the driver. In yet another embodiment the driver awareness component can use a pedal pressure detector (e.g., sensor 126) to determine the level of awareness of the driver. In various embodiment, the driver awareness component 130 can detect the presence of passengers in the vehicle 102. In response to detecting an interaction between the driver and a passenger in the vehicle, the driver awareness component 130 can determine that the level of awareness of the driver has been reduced. In some embodiments, the driver awareness component 130 can detect use of a media system onboard the vehicle 102 or integrated into the vehicle 102. In response to detecting that the media system is being used, the driver awareness component 130 can determine that the level of awareness of the driver has been reduced. The driver awareness component 130 can detect and/or determine an amount of time that a driver has been operating the vehicle 102 or has been present within the vehicle 102. The driver awareness component 130 can determine an amount of time that a passenger has been present in the vehicle 102. The driver awareness component 130 can determine that a passenger has entered the vehicle 102 or has exited the vehicle 102.

In some embodiments, the driver awareness component 130 can determine a level of awareness of a driver of the vehicle 102. The driver awareness component 130 can use visual sensors (e.g., sensors 126) to identify a passenger or to determine in which seat a passenger is sitting. The driver awareness component 130 can use an infrared (IR) sensor, or additional cameras (e.g., stereo vision) in connection with determining a level of awareness of a driver of the vehicle 102, identifying a passenger or determining in which seat a passenger is sitting, or any of the other features or functions described throughout this specification pertaining to identification or detection. The driver awareness component 130 can determine whether a passenger has entered the vehicle 102 and in which seat the passenger is sitting. The driver awareness component 130 can determine whether a passenger has left the vehicle and 102 whether the seat in which the passenger was sitting is currently unoccupied. The driver awareness component 130 can further determine whether a passenger within the vehicle 102 has changed seats and in which seat the passenger is presently occupying. In some embodiments, the driver awareness component 130 can use visual analysis to detect the behavior of vehicles and/or pedestrians. For example, the driver awareness component 130 can use head pose estimation algorithms. The driver awareness component 130 can use the detected behavior in conjunction with other detected information, such as vehicle speed, light analysis, GPS analysis, etc., to perform a more robust and accurate analysis and make a more comprehensive determination of driver awareness.

In some embodiments, the hazard detection component 132 can detect a hazard. The hazard detection component 132 can facilitate early detection of hazardous road conditions and enable proactive adjustment to vehicle dynamics. The hazard detection component 132 can determine a level of severity of the detected hazard. For example, the hazard detection component 132 could detect that it is raining and that roads are wet. The hazard detection component 132 could determine that the detected wet roads are a lower level of severity as compared to other potential hazards, such as icy roads or an oncoming vehicle that has drifted into the wrong lane and is on course to collide with the vehicle 102.

In some embodiments, the regulation component 134 can regulate lateral control of the vehicle 102, based on the detected hazard and determined level of awareness of the driver. The regulation by the regulation component 134 can further comprise regulation of a hand wheel activator of the vehicle 102. The degree of regulation of the hand wheel activator can be scaled based upon the determined level of awareness of the driver. In response to a determination of a level of awareness above a certain predetermined threshold by the driver awareness component 130, the level of regulation of the hand wheel activator by the regulation component 134 can be increased. In response to a determination of a level of awareness below a certain predetermined threshold by the driver awareness component 130, the level of regulation of the hand wheel activator by the regulation component 134 can be decreased. In another embodiment, the regulation component 134 can regulate control of the vehicle 102 based on the severity of the detected hazard. For example, if the detected hazard is determined (e.g., by the hazard detection component 132) to be a low level of severity such as, for example, light rain, the regulation component 134 can determine that the level of regulation of the hand wheel activator can be reduced, so as to not distract or surprise the driver. It will be appreciated by one of ordinary skill in the art that a driver would not anticipate a significant amount of regulation of the hand wheel activator in response to detection of a minor hazard. Similarly, it will be appreciated that a driver would anticipate, and desire, a greater level of regulation in response to detection of a greater hazard. By way of example, if the vehicle 102 drifts slightly over a lane, a driver will expect the level of regulation to be of a lesser degree than if the vehicle 102 drifted entirely outside of its designated lane. Thus, the level of regulation can be scaled to the level of the detected hazard.

Artificial intelligence component 202 can train an artificial intelligence model to determines a level of awareness of the driver. According to an embodiment, the artificial intelligence component 202 can train the artificial intelligence model to detects hazards. In various embodiments, the artificial intelligence component 202 can train the artificial intelligence model to regulate operation of the vehicle based on the detected hazard and determined level of awareness of the driver.

The systems and/or devices are described herein with respect to interaction between one or more components. Such systems and/or components can include the components and/or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity but known by those of skill in the art.

One or more systems, devices, computer program products, and/or computer-implemented methods provided herein relate to automated overlay correction of steering angle with minimal driver interference. A system can include a processor that executes computer executable components stored in memory. The computer executable components can include a driver awareness component that determines a level of awareness of a driver. The computer executable components can further include a hazard detection component that detects a hazard. The computer executable components can further include a regulation component that regulates lateral control of the vehicle based on the detected hazard and determined level of awareness of the driver.

Systems described herein can be coupled (e.g., communicatively, electrically, operatively, optically, inductively, acoustically, etc.) to one or more local or remote (e.g., external) systems, sources, and/or devices (e.g., electronic control systems (ECU), classical and/or quantum computing devices, communication devices, etc.). For example, system 100 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some embodiments, systems herein can be coupled (e.g., communicatively, electrically, operatively, optically, inductively, acoustically, etc.) to one or more local or remote (e.g., external) systems, sources, and/or devices (e.g., electronic control units (ECU), classical and/or quantum computing devices, communication devices, etc.) via a network. In these embodiments, such a network can comprise one or more wired and/or wireless networks, including, but not limited to, a cellular network, a wide area network (WAN) (e.g., the Internet), and/or a local area network (LAN). For example, system 100 can communicate with one or more local or remote (e.g., external) systems, sources, and/or devices, for instance, computing devices using such a network, which can comprise virtually any desired wired or wireless technology, including but not limited to: powerline ethernet, VHF, UHF, AM, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, L-band voice or data information, 6LoWPAN (IPv6 over Low power Wireless Area Networks), Z-Wave, an ANT, an ultra-wideband (UWB) standard protocol, and/or other proprietary and non-proprietary communication protocols. In this example, system 100 can thus include hardware (e.g., a central processing unit (CPU), a transceiver, a decoder, an antenna (e.g., a ultra-wideband (UWB) antenna, a BLUETOOTH^{®} low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

Systems herein can comprise one or more computer and/or machine readable, writable, and/or executable components and/or instructions that, when executed by processor (e.g., a processing unit 110 which can comprise a classical processor, a quantum processor, etc.), can facilitate performance of operations defined by such component(s) and/or instruction(s). Further, in numerous embodiments, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous embodiments, system herein and/or any components associated therewith as disclosed herein, can employ a processor (e.g., processing unit 110) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such embodiments are envisioned. For example, a system (e.g., a system 100 or any other system or device described herein) can comprise a computing device, a general-purpose computer, field-programmable gate array, AI accelerator application-specific integrated circuit, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, wearable device, internet of things device, a cell phone, a smart phone, a consumer appliance and/or instrumentation, an industrial and/or commercial device, a digital assistant, a multimedia Internet enabled phone, a multimedia players, and/or another type of device.

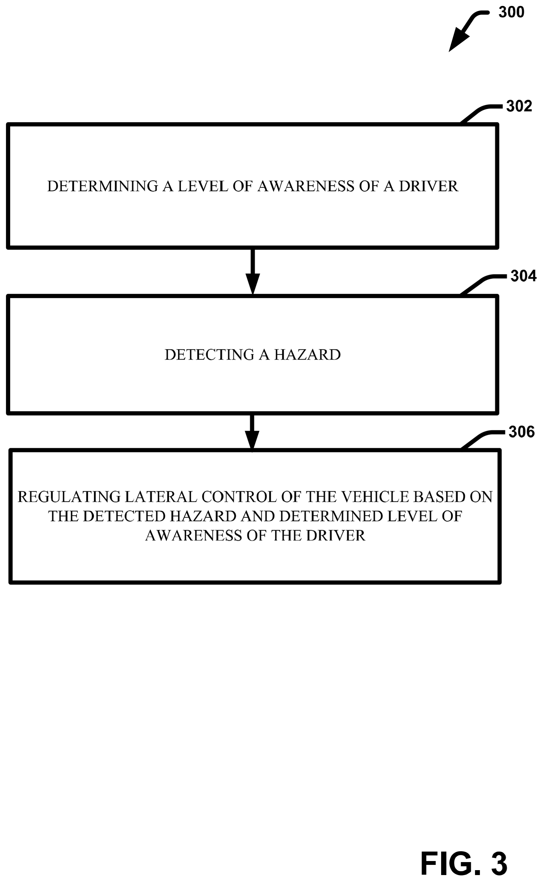

Next, FIG. 3 illustrates a flow diagram of a method 300 that can facilitate automated overlay correction of steering angle with minimal driver interference onboard a vehicle in accordance with some embodiments described herein, such as the system 200 of FIG. 2 and the system 100 of FIG. 1.

For simplicity of explanation, the computer-implemented methods provided herein are depicted and/or described as a series of actions. It is to be understood that the subject matter is not limited by the actions illustrated and/or by the order thereof. For example, actions can occur in one or more orders, concurrently, and/or with other acts not presented and described herein. Furthermore, not all illustrated actions can be utilized to implement the computer-implemented methods in accordance with the described subject matter. In addition, the computer-implemented methods could alternatively be represented as a series of interrelated states via a state diagram or events. Additionally, the computer-implemented methods described in this specification are capable of being stored on an article of manufacture to facilitate transporting and transferring the computer-implemented methods to computers. The term article of manufacture, as used herein, encompasses a computer program accessible from any computer-readable device or storage media.

While the method 300 is described relative to the system 200 of FIG. 2, the method 300 can be applicable also to other systems described herein. Repetitive description of like elements and/or processes employed in respective embodiments is omitted for sake of brevity.

At 302, the method can include determining a level of awareness of a driver. For example, a combination of sensors can be used to monitor driver behavior and engagement. Eyetracking cameras can analyze gaze direction and blinking patterns to assess focus and detect fatigue. Facial recognition technology can identify signs of drowsiness, such as yawning or headnodding. Hand sensors on the steering wheel can determine whether a driver's hands are actively gripping the wheel or intermittently letting go, while seat sensors can monitor posture changes that can indicate inattentiveness. Pedal sensors can track acceleration or braking behavior, such as delays in pedal input, to infer situational awareness.

At 304, the method can include detecting a hazard. For example, an imminent lane departure can be detected.

At 306, the method can include regulating lateral control of the vehicle based on the detected hazard and determined level of awareness of the driver. For example, if the driver is highly engaged (as determined by steady eye contact on the road, firm hand presence on the steering wheel, and active posture) a stronger corrective input can be executed on the steering wheel, signaling the driver with noticeable haptic feedback. This feedback can reassure the driver that swift action is being taken to avoid a potential hazard. However, in a different scenario where the driver is distracted or fatigued (as evidenced by infrequent eye contact, reduced hand engagement, or slouched posture) a gentler steering correction can be applied. This smaller input to the steering wheel can ensure the corrective action feels smooth and natural, avoiding a sudden, startling reaction that could further confuse or disorient the inattentive driver. Importantly, the road wheels would still receive the same level of correction to maintain safety, regardless of the driver's level of awareness. Thus, the steering wheel input adjusts dynamically to align with the driver's detected level of attention, thereby maintaining a balance between effective safety interventions and a smooth, predictable driving experience.

The method 300 for regulating lateral control of a vehicle can include obtaining real-time sensor input from various sources, including cameras, LiDAR, radar, and GPS. Cameras can capture visual data to identify lane markings, road edges, obstacles, surrounding vehicles, or any other visual information relevant to the driving and/or safety of the vehicle. LiDAR can provide 3D spatial mapping of a vehicle's environment by detecting objects and measuring distances. Radar can detect moving objects, such as other vehicles or pedestrians, and assess their respective speeds and/or distances. GPS can provide geolocation data pertaining to the vehicle's position within a larger map or road network. Sensor data can be transmitted to a data processing device, which can integrate and processes the information to form a coherent understanding of the vehicle's environment and its immediate surroundings. Using advanced algorithms and machine learning models, this data can be used to generate control instructions. These instructions can then be sent to the vehicle's lateral control components (e.g., the hand wheel activator and/or the road wheel activator). The hand wheel activator can adjust steering by converting control signals into rotational movement. The road wheel activator can adjust the vehicle's wheels to maintain proper alignment and ensure smooth, safe maneuvering. Sensor inputs can continuously be monitored and processed in real time to enable dynamic maintenance of vehicle stability and safety in response to changing road conditions, traffic patterns, and other environmental factors.

In some embodiments, method 300 is performed by a system, such as system 100 of FIG. 1 or system 200 of FIG. 2.

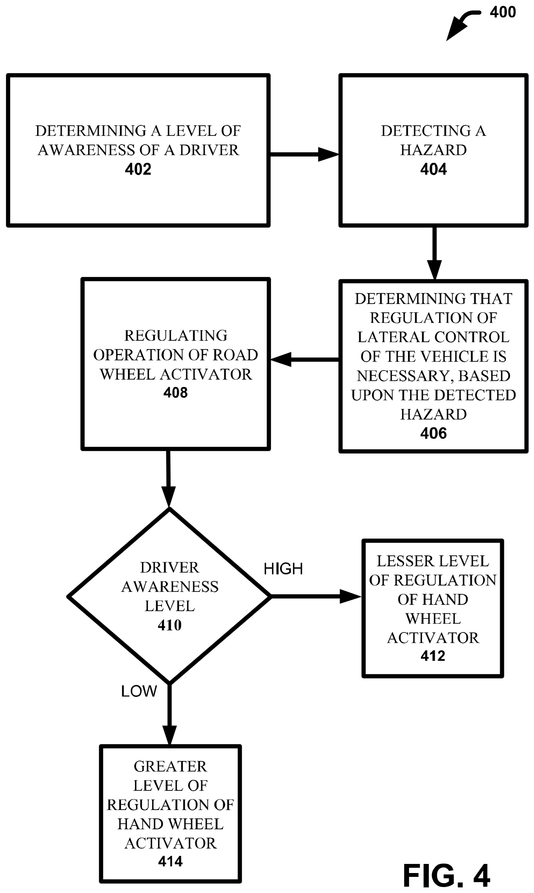

Next, FIG. 4 illustrates a flow diagram of a method 400 that can facilitate automated overlay correction of steering angle with minimal driver interference onboard a vehicle in accordance with some embodiments described herein, such as the system 200 of FIG. 2 and the system 100 of FIG. 1. While the method 400 is described relative to the system 200 of FIG. 2, the method 400 can be applicable also to other systems described herein. Repetitive description of like elements and/or processes employed in respective embodiments is omitted for sake of brevity.

At 402, the method can include determining a level of awareness of a driver. At 404, the method can include detecting a hazard. At 406, the method can include determining that regulation of lateral control of the vehicle is necessary, based upon the detected hazard. At 408, the method can include regulating operation of a road wheel activator of the vehicle. As used herein, the term "road wheel activator" refers to a device that can enable control of the rotational motion and operation of a vehicle's road wheels. Road wheel activators can be mechanically, hydraulically, or electronically connected to a vehicle's drivetrain, braking, or steering systems. A road wheel activator can control functions (e.g., propulsion, braking, or directional movement) of a vehicle. Road wheel activators can be integrated into conventional vehicles, specialized machinery, or adaptive systems for individuals with disabilities. For example, a road wheel activator can convert input from a vehicle's engine, electric motor, or braking system into rotational motion of a road wheels via axles, drive shafts, or transmission components. Hydraulic or pneumatic systems can be employed to amplify or modulate force for braking or steering applications, allowing for precise control of road wheels under various load conditions. Electronic sensors (e.g., speed encoders or torque sensors) can monitor the motion of road wheels and relay data to an electronic control unit, which can adjust operation of the road wheel activator in real time. Feedback systems, such as anti-lock braking or traction control mechanisms, can enhance safety and performance by dynamically regulating the road wheel activator's output in response to environmental or operational conditions.

At 410, the method can include determining a level of awareness of a driver of the vehicle. At 412, in response to determining that the level of awareness of the driver is high, the method can include a reduced level of regulation of a hand-wheel activator of the vehicle. At 414, in response to determining that the level of awareness of the driver is low, the method can include a greater level of regulation of a hand-wheel activator of the vehicle.

In some embodiments, method 400 is performed by a system, such as system 100 of FIG. 1 or system 200 of FIG. 2.

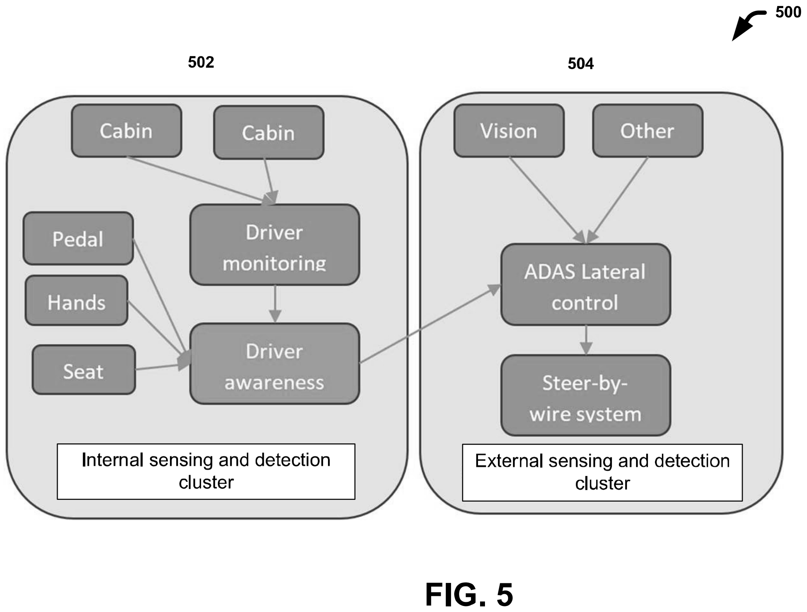

Next, FIG. 5 illustrates a flow diagram of a method 500 that can facilitate automated overlay correction of steering angle with minimal driver interference onboard a vehicle in accordance with some embodiments described herein, such as the system 200 of FIG. 2 and the system 100 of FIG. 1. While the method 500 is described relative to the system 200 of FIG. 2, the method 400 can be applicable also to other systems described herein. Repetitive description of like elements and/or processes employed in respective embodiments is omitted for sake of brevity.

The ECU can calculate a desired steering angle based on inputs from steering wheel actuator, ADAS sensors, and control algorithms. The ADAS sensors can be part of a sensing and detection cluster, which can include components such as cameras, radar, lidar, and ultrasonic sensors. This cluster can collect real-time environmental and vehicle data, providing the ECU with critical information to determine and execute precise steering adjustments.

More particularly, at 502, internal sensing and detection clusters can incorporate pedal sensors to monitor accelerator or brake inputs, hand sensors to detect a driver's steering engagement, and seat sensors to evaluate driver presence or positioning. These sensors can work alongside driver monitoring systems (e.g., system 100 or 200), which can further include eyetracking cameras or facial recognition technologies, to assess driver attentiveness, fatigue, or distraction. Collectively, these components can provide comprehensive input to ensure safe and reliable automated corrections, evasive maneuvers, and other ADAS functions.

At 504, external sensing and detection clusters can incorporate road wheel actuators to operate independently, enabling advanced features like active rear-wheel steering, variable steering ratios, and autonomous corrective maneuvers. Driver awareness can play a critical role in how steering wheel inputs are adjusted. Specifically, while road wheel actuators make the necessary adjustments to the wheels to maintain vehicle safety and stability, the level of adjustment communicated to the steering wheel actuator varies based on the driver's detected awareness. If the driver is determined to be alert and engaged, more pronounced or extreme steering wheel inputs can be allowed, as the driver is less likely to be surprised or distracted by such feedback. Conversely, if there is a determined lack of driver attention, the corrective input provided to the steering wheel actuator is limited to ensure a smooth and non-jarring ride. Importantly, the adjustments to the road wheels remain consistent regardless of driver awareness, ensuring that the vehicle executes the necessary corrections for safety while tailoring steering wheel feedback to maintain driver comfort and confidence.

In order to provide additional context for various embodiments described herein, FIG. 6 and the following discussion are intended to provide a brief, general description of a suitable computing environment 600 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers (e.g., ruggedized personal computers), field-programmable gate arrays, hand-held computing devices, microprocessor-based or programmable consumer electronics, and the like, each of which can be operatively coupled to one or more associated devices.

The illustrated embodiments of the embodiments herein can also be practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, optic, infrared, and other wireless media.

With reference again to FIG. 6, the example environment 600 for implementing various embodiments of the aspects described herein includes a computer 602, the computer 602 including a processing unit 604, a system memory 606 and a system bus 608. The system bus 608 couples system components including, but not limited to, the system memory 606 to the processing unit 604. The processing unit 604 can be any of various commercially available processors, field-programmable gate array, AI accelerator application-specific integrated circuit, or other suitable processors. Dual microprocessors and other multi-processor architectures can also be employed as the processing unit 604.

The system bus 608 can be any of several types of bus structure that can further interconnect to a memory bus (with or without a memory controller), a peripheral bus, and a local bus using any of a variety of commercially available bus architectures. The system memory 606 includes ROM 610 and RAM 612. A basic input/output system (BIOS) can be stored in a nonvolatile memory such as ROM, erasable programmable read only memory (EPROM), EEPROM, which BIOS contains the basic routines that help to transfer information between elements within the computer 602, such as during startup. The RAM 612 can also include a high-speed RAM such as static RAM for caching data. It is noted that unified Extensible Firmware Interface(s) can be utilized herein.

The computer 602 further includes an internal hard disk drive (HDD) 614 (e.g., EIDE, SATA), one or more external storage devices 616 (e.g., a magnetic floppy disk drive (FDD) 616, a memory stick or flash drive reader, a memory card reader, etc.) and an optical disk drive 620 (e.g., which can read or write from a disc 622 such as a CD-ROM disc, a DVD, a BD, etc.). While the internal HDD 614 is illustrated as located within the computer 602, the internal HDD 614 can also be configured for external use in a suitable chassis (not shown). Additionally, while not shown in environment 600, a solid-state drive (SSD) could be used in addition to, or in place of, an HDD 614. The HDD 614, external storage device(s) 616 and optical disk drive 620 can be connected to the system bus 608 by an HDD interface 624, an external storage interface 626 and an optical drive interface 628, respectively. The interface 624 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 602, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 612, including an operating system 630, one or more application programs 632, other program modules 634 and program data 636. All or portions of the operating system, applications, modules, and/or data can also be cached in the RAM 612. The systems and methods described herein can be implemented utilizing various commercially available operating systems or combinations of operating systems.

Computer 602 can optionally comprise emulation technologies. For example, a hypervisor (not shown) or other intermediary can emulate a hardware environment for operating system 630, and the emulated hardware can optionally be different from the hardware illustrated in FIG. 6. In such an embodiment, operating system 630 can comprise one virtual machine (VM) of multiple VMs hosted at computer 602. Furthermore, operating system 630 can provide runtime environments, such as the Java runtime environment or the .NET framework, for applications 632. Runtime environments are consistent execution environments that allow applications 632 to run on any operating system that includes the runtime environment. Similarly, operating system 630 can support containers, and applications 632 can be in the form of containers, which are lightweight, standalone, executable packages of software that include, e.g., code, runtime, system tools, system libraries and settings for an application.

Further, computer 602 can be enabled with a security module, such as a trusted processing module (TPM). For instance, with a TPM, boot components hash next in time boot components, and wait for a match of results to secured values, before loading a next boot component. This process can take place at any layer in the code execution stack of computer 602, e.g., applied at the application execution level or at the operating system (OS) kernel level, thereby enabling security at any level of code execution.

A user can enter commands and information into the computer 602 through one or more wired/wireless input devices, e.g., a keyboard 638, a touch screen 640, and a pointing device, such as a mouse 642. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 604 through an input device interface 644 that can be coupled to the system bus 608, but can be connected by other interfaces, such as a parallel port, an IEEE 1394 serial port, a game port, a USB port, an IR interface, a BLUETOOTH^{®} interface, etc.

A monitor 646 or other type of display device can also be connected to the system bus 608 via an interface, such as a video adapter 648. In addition to the monitor 646, a computer typically includes other peripheral output devices (not shown), such as speakers, printers, etc.

The computer 602 can operate in a networked environment using logical connections via wired and/or wireless communications to one or more remote computers, such as a remote computer(s) 650. The remote computer(s) 650 can be a workstation, a server computer, a router, a personal computer, portable computer, microprocessor-based entertainment appliance, a peer device or other common network node, and typically includes many or all of the elements described relative to the computer 602, although, for purposes of brevity, only a memory/storage device 652 is illustrated. The logical connections depicted include wired/wireless connectivity to a local area network (LAN) 654 and/or larger networks, e.g., a wide area network (WAN) 656. Such LAN and WAN networking environments are commonplace in offices and companies, and facilitate enterprise-wide computer networks, such as intranets, all of which can connect to a global communications network, e.g., the Internet.

When used in a LAN networking environment, the computer 602 can be connected to the local network 654 through a wired and/or wireless communication network interface or adapter 658. The adapter 658 can facilitate wired or wireless communication to the LAN 654, which can also include a wireless access point (AP) disposed thereon for communicating with the adapter 658 in a wireless mode.

When used in a WAN networking environment, the computer 602 can include a modem 660 or can be connected to a communications server on the WAN 656 via other means for establishing communications over the WAN 656, such as by way of the Internet. The modem 660, which can be internal or external and a wired or wireless device, can be connected to the system bus 608 via the input device interface 644. In a networked environment, program modules depicted relative to the computer 602 or portions thereof, can be stored in the remote memory/storage device 652. It will be appreciated that the network connections shown are example and other means of establishing a communications link between the computers can be used.

When used in either a LAN or WAN networking environment, the computer 602 can access cloud storage systems or other network-based storage systems in addition to, or in place of, external storage devices 616 as described above. Generally, a connection between the computer 602 and a cloud storage system can be established over a LAN 654 or WAN 656 e.g., by the adapter 658 or modem 660, respectively. Upon connecting the computer 602 to an associated cloud storage system, the external storage interface 626 can, with the aid of the adapter 658 and/or modem 660, manage storage provided by the cloud storage system as it would other types of external storage. For instance, the external storage interface 626 can be configured to provide access to cloud storage sources as if those sources were physically connected to the computer 602.

The computer 602 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

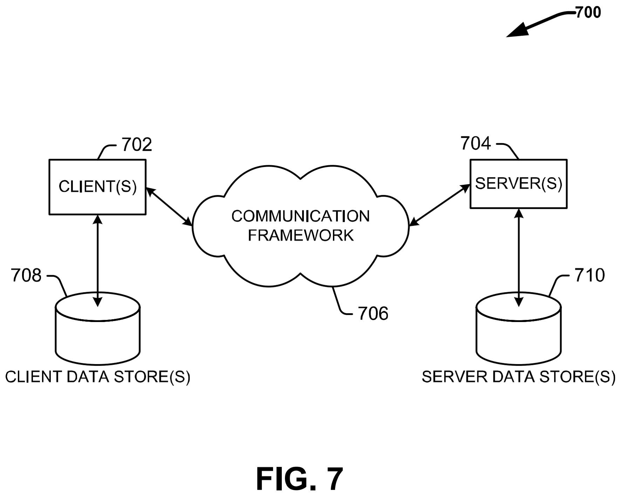

Referring now to FIG. 7, there is illustrated a schematic block diagram of a computing environment 700 in accordance with this specification. The system 700 includes one or more client(s) 702, (e.g., computers, smart phones, tablets, cameras, PDA's). The client(s) 702 can be hardware and/or software (e.g., threads, processes, computing devices). The client(s) 702 can house cookie(s) and/or associated contextual information by employing the specification, for example.

The system 700 also includes one or more server(s) 704. The server(s) 704 can also be hardware or hardware in combination with software (e.g., threads, processes, computing devices). The servers 704 can house threads to perform transformations of media items by employing aspects of this disclosure, for example. One possible communication between a client 702 and a server 704 can be in the form of a data packet adapted to be transmitted between two or more computer processes wherein data packets can include coded analyzed headspaces and/or input. The data packet can include a cookie and/or associated contextual information, for example. The system 700 includes a communication framework 706 (e.g., a global communication network such as the Internet) that can be employed to facilitate communications between the client(s) 702 and the server(s) 704.

Communications can be facilitated via a wired (including optical fiber) and/or wireless technology. The client(s) 702 are operatively connected to one or more client data store(s) 708 that can be employed to store information local to the client(s) 702 (e.g., cookie(s) and/or associated contextual information). Similarly, the server(s) 704 are operatively connected to one or more server data store(s) 710 that can be employed to store information local to the servers 704. Further, the client(s) 702 can be operatively connected to one or more server data store(s) 710.

In one exemplary implementation, a client 702 can transfer an encoded file, (e.g., encoded media item), to server 704. Server 704 can store the file, decode the file, or transmit the file to another client 702. It is noted that a client 702 can also transfer uncompressed file to a server 704 and server 704 can compress the file and/or transform the file in accordance with this disclosure. Likewise, server 704 can encode information and transmit the information via communication framework 706 to one or more clients 702.

The illustrated aspects of the disclosure can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the spirit and scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter can have been disclosed with respect to only one of several implementations, such feature can be combined with one or more other features of the other implementations as can be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of the invention are provided by the subject matter of the following clauses:
1. A system onboard a vehicle, comprising: a memory that stores computer executable components; and a processor that executes the computer executable components stored in memory, wherein the computer executable components comprise: a driver awareness component that determines a level of awareness of a driver; a hazard detection component that detects a hazard; and a regulation component that regulates lateral control of the vehicle based on the detected hazard and determined level of awareness of the driver.
2. The system of any one or more preceding clause(s), wherein the driver awareness component uses input from at least one of a camera, a radar, a lidar, or an ultrasonic sensor to determine the level of awareness of the driver.
3. The system of any one or more preceding clause(s), wherein the driver awareness component uses input from a seat pressure detector or a hands on wheel detector to determine the level of awareness of the driver.
4. The system of any one or more preceding clause(s), wherein the driver awareness component uses input form a pedal pressure detector to determine the level of awareness of the driver.
5. The system of any one or more preceding clause(s), wherein the driver awareness component detects presence of passengers in the vehicle.
6. The system of any one or more preceding clause(s), wherein the driver awareness component detects an interaction between the driver and a passenger in the vehicle.
7. The system of any one or more preceding clause(s), wherein, in response to detecting an interaction between the driver and a passenger in the vehicle, the driver awareness component determines the level of awareness of the driver has been reduced.
8. The system of any one or more preceding clause(s), wherein the driver awareness component detects the use of a media system in the vehicle.
9. The system of any one or more preceding clause(s), wherein in response to detecting a use of a media system in the vehicle, the driver awareness component determines the level of awareness of the driver has been reduced.
10. The system of any one or more preceding clause(s), wherein the driver awareness component determines an amount of time the driver has been operating the vehicle.
11. The system of any one or more preceding clause(s), wherein the driver awareness component determines an amount of time a passenger has been present within the vehicle.
12. The system of any one or more preceding clause(s), wherein the regulation by the regulation component further comprises regulation of operation of a road wheel activator of the vehicle.
13. The system of any one or more preceding clause(s), wherein the regulation by the regulation component further comprises regulation of a hand wheel activator of the vehicle, and wherein the degree of regulation of the hand wheel activator is scaled based upon the determined level of awareness of the driver.
14. The system of any one or more preceding clause(s), wherein, in response to a determination of level of awareness above a certain threshold, e.g. an awareness threshold, by the driver awareness component or a determination of a level of hazard above a predetermined threshold, e.g. a hazard threshold, by the hazard detection component, the level of regulation of the hand wheel activator by the regulation component is increased.
15. The system of any one or more preceding clause(s), wherein, in response to a determination of level of awareness above a certain threshold, e.g. an awareness threshold, by the driver awareness component or a determination of a level of hazard above a predetermined threshold, e.g. a hazard threshold, by the hazard detection component, the level of regulation of the hand wheel activator by the regulation component is decreased.
16. The system of any one or more preceding clause(s), further comprising an artificial intelligence component that trains an artificial intelligence model to determine a level of awareness of the driver.
17. The system of any one or more preceding clause(s), wherein the artificial intelligence component further trains the artificial intelligence model to detects hazards.
18. The system of any one or more preceding clause(s), wherein the artificial intelligence component further trains the artificial intelligence model to regulate operation of the vehicle based on the detected hazard and determined level of awareness of the driver.
19. A computer-implemented method, for automated overlay correction of steering angle with minimal driver interference, performed by a data processing device (e.g. a core computer) of a vehicle, comprising: determining a level of awareness of a driver of the vehicle; detecting a hazard; and regulating lateral control of the vehicle based on the detected hazard and determined level of awareness of the driver.
20. The method of clause 19, further comprising using input form at least one of a camera, a radar, a lidar, or an ultrasonic sensor to determine the level of awareness of the driver.
21. The method of one or more of preceding clause(s) 19 to 20, further comprising using input from a seat pressure detector or a hands on wheel detector to determine the level of awareness of the driver.
22. The method of one or more of preceding clause(s) 19 to 21, further comprising using input form a pedal pressure detector to determine the level of awareness of the driver.
23. The method of one or more of preceding clause(s) 19 to 22, further comprising detecting presence of passengers in the vehicle.
24. The method of one or more of preceding clause(s) 19 to 23, further comprising detecting an interaction between the driver and a passenger in the vehicle.
25. The method of one or more of preceding clause(s) 19 to 24, further comprising in response to detecting an interaction between the driver and a passenger in the vehicle, determining the level of awareness of the driver has been reduced.
26. The method of one or more of preceding clause(s) 19 to 25, further comprising detecting the use of a media system in the vehicle.
27. The method of one or more of preceding clause(s) 19 to 26, further comprising, in response to detecting a use of a media system in the vehicle, determining the level of awareness of the driver has been reduced.
28. The method of one or more of preceding clause(s) 19 to 27, further comprising determining an amount of time the driver has been operating the vehicle.
29. The method of one or more of preceding clause(s) 19 to 28, further comprising determining an amount of time a passenger has been present within the vehicle.
30. The method of one or more of preceding clause(s) 19 to 29, wherein the regulation further comprises regulation of operation of a road wheel activator of the vehicle.
31. The method of one or more of preceding clause(s) 19 to 30, wherein the regulation further comprises regulation of a hand wheel activator of the vehicle, and wherein the degree of regulation of the hand wheel activator is scaled based upon the determined level of awareness of the driver.
32. The method of one or more of preceding clause(s) 19 to 31, wherein, in response to a determination of a level of awareness above a certain threshold, e.g., an awareness threshold, or a determination of a level of hazard, e.g., a hazard threshold, above a predetermined threshold, the level of regulation of the hand wheel activator is increased.
33. The method of one or more of preceding clause(s) 19 to 32, wherein, in response to a determination of a level of awareness above a certain threshold, e.g., an awareness threshold, or a determination of a level of hazard above a predetermined threshold, e.g., a hazard threshold, the level of regulation of the hand wheel activator is decreased.
34. The method of one or more of preceding clause(s) 19 to 33, further comprising training an artificial intelligence model to determine a level of awareness of the driver.
35. The method of one or more of preceding clause(s) 19 to 34, further comprising training the artificial intelligence model to detects hazards.
36. The method of one or more of preceding clause(s) 19 to 35, further comprising training the artificial intelligence model to regulate operation of the vehicle based on the detected hazard and determined level of awareness of the driver.
37. A non-transitory machine-readable storage medium, comprising executable instructions that, when executed by a processor onboard a vehicle, facilitate performance of operations, comprising: determining a level of awareness of a driver; detecting a hazard; and regulating lateral control of the vehicle based on the detected hazard and determined level of awareness of the driver.
38. Any suitable combination of any one or more of system clauses 1-18.
39. Any suitable combination of any one of more of method clause 19-36.

## Claims

1. A system onboard a vehicle, comprising:
a memory that stores computer executable components; and
a processor that executes the computer executable components stored in memory, wherein the computer executable components comprise:
a driver awareness component that determines a level of awareness of a driver;
a hazard detection component that detects a hazard; and
a regulation component that regulates lateral control of the vehicle based on the detected hazard and determined level of awareness of the driver.

2. The system of claim 1, wherein the driver awareness component uses input from at least one of a camera, a radar, a lidar, or an ultrasonic sensor to determine the level of awareness of the driver.

3. The system of claim 1, wherein the driver awareness component uses input from a seat pressure detector or a hands on wheel detector to determine the level of awareness of the driver.

4. The system of claim 1, wherein the driver awareness component uses input from a pedal pressure detector to determine the level of awareness of the driver.

5. The system of claim 1, wherein the driver awareness component detects presence of passengers in the vehicle.

6. The system of claim 5, wherein the driver awareness component detects an interaction between the driver and a passenger in the vehicle.

7. The system of claim 6, wherein, in response to detecting an interaction between the driver and a passenger in the vehicle, the driver awareness component determines the level of awareness of the driver has been reduced.

8. The system of claim 1, wherein the driver awareness component detects the use of a media system in the vehicle, determines an amount of time the driver has been operating the vehicle, and/or determines an amount of time a passenger has been present within the vehicle.

9. The system of claim 1, wherein the regulation by the regulation component further comprises regulation of operation of a road wheel activator of the vehicle.

10. The system of claim 9, wherein the regulation by the regulation component further comprises regulation of a hand wheel activator of the vehicle, and wherein the degree of regulation of the hand wheel activator is scaled based upon the determined level of awareness of the driver.

11. The system of claim 10, wherein, in response to a determination of level of awareness above a certain threshold by the driver awareness component or a determination of a level of hazard above a predetermined threshold by the hazard detection component, the level of regulation of the hand wheel activator by the regulation component is increased.

12. The system of claim 10, wherein, in response to a determination of a level of awareness above a predetermined threshold by the driver awareness component or a determination of a level of hazard above a predetermined threshold by the hazard detection component, the level of regulation of the hand wheel activator by the regulation component is decreased.

13. The system of claim 1, further comprising an artificial intelligence component that trains an artificial intelligence model to determine a level of awareness of the driver.

14. The system of claim 13, wherein the artificial intelligence component further trains the artificial intelligence model to detect hazards and/or to regulate operation of the vehicle based on the detected hazard and determined level of awareness of the driver.

15. A computer-implemented method performed by a data processing device (e.g., a core computer) of a vehicle, comprising:
determining a level of awareness of a driver of the vehicle;
detecting a hazard; and
regulating lateral control of the vehicle based on the detected hazard and determined level of awareness of the driver.
